# EUROPEAN PATENT APPLICATION

(11) **EP 4 521 827 A1**
(43) Date of publication of application: **12.03.2025**
(21) Application number: 23799310.0
(22) Date of filing: 06.05.2023
(51) Int. Cl.: H04W 52/02

(54) **METHOD FOR REDUCING POSITIONING POWER CONSUMPTION, NETWORK ELEMENT, TERMINAL, APPARATUS AND STORAGE MEDIUM**

(30) Priority: 06.05.2022 CN 202210489993
(71) Applicant: Datang Mobile Communications Equipment Co., Ltd., Beijing 100085 (CN)
(72) Inventor: HOU, Yunjing, Beijing 100085 (CN); AI, Ming, Beijing 100085 (CN)
(74) Representative: Studio Torta S.p.A.
(86) International application number: PCT/CN2023/092535
(87) International publication number: WO 2023/213324

(57) **Abstract**

Embodiments of the present disclosure provide a method for reducing positioning power consumption, a network element, a terminal, an apparatus, and a storage medium. The method for reducing positioning power consumption, applied to a first network element, comprises: the first network element sending a first message to a second network element or a third network element, the first message carrying a low-power consumption indication and/or region information, the low-power consumption indication being used to indicate execution of a low-power consumption positioning process, and the region information being used to indicate a region allowing a terminal to send an event report.

## Description

### CROSS-REFERENCES TO RELATED APPLICATIONS

The present application claims priority to Chinese patent application No. 202210489993.8 filed on May 06, 2022, entitled "Method for Reducing Positioning Power Consumption, Network Element, Terminal, Apparatus and Storage Medium", which is hereby incorporated by reference in its entirety.

### FIELD

The present application relates to the field of communications, and in particular, to methods and apparatuses for low power positioning, network functions, a user equipment (UE) and a storage medium.

### BACKGROUND

In the related art, whether to perform low power location request procedure is decided by a radio access network (RAN) node. Since the RAN node cannot obtain the information that may only be obtained by a core network function, such as user equipment (UE) subscription information, location service (LCS) client types, service types, and other information, that is, the RAN node may only obtain less information, more requirements cannot be supported in the related art. For example, low power location request procedure for UEs with specific subscriptions cannot be supported, or low power location request procedure for LCS clients with types cannot be supported.

In addition, in the related art, only the UE power consumption may be reduced when reporting a delayed positioning event, but how to reduce UE power consumption in one-time positioning is not considered. In particular, how to reduce power consumption in one-time positioning of devices with limited movement ranges (such as vehicles and robotic arms that transport materials in factories) or static Internet of things (IoT) devices is not considered.

### BRIEF SUMMARY

Embodiments of the present application provide methods and apparatuses for low power positioning, network functions, a user equipment (UE), and a storage medium, to solve the defect in the related art that low power location request procedure of a UE in a specific scenario or having a specific requirement cannot be supported.

An embodiment of the present application provides a method for low power positioning, performed by a first network function, including:
transmitting a first message to a second network function or a third network function, where the first message carries a low power indication and/or area information, the low power indication is used to indicate performing low power location request procedure, and the area information is used to indicate an area inside which a user equipment (UE) is allowed to transmit an event report.

According to the method for low power positioning provided by an embodiment of the present application, before transmitting the first message to the second network function or the third network function, the method further includes:
determining that first information carries the low power indication, where the first information includes at least one of the following: a UE capability, a client request message, a UE request message, a location service (LCS) quality of service (QoS), UE subscription information, a serving cell of a UE, a network capability, an operator policy, an LCS client type or a service type; or
receiving a positioning request message from a fourth network function, where the positioning request message carries the low power indication.

According to the method for low power positioning provided by an embodiment of the present application, before transmitting the first message to the second network function or the third network function, the method further includes:
receiving a second message from a UE or the second network function, where the second message carries at least one of the following: first capability information, a low power location request message, or the low power indication,
where the first capability information is used to indicate that the UE supports the low power location request procedure.

According to the method for low power positioning provided by an embodiment of the present application, the method further includes:
transmitting a second reply message to the UE or the second network function, where the second reply message carries low power positioning configuration information.

According to the method for low power positioning provided by an embodiment of the present application, before transmitting the second reply message to the UE or the second network function, the method further includes:
transmitting a third message to the third network function; and
receiving a third reply message from the third network function, where the third reply message carries the low power positioning configuration information.

An embodiment of the present application further provides a method for low power positioning, performed by a second network function, including:
receiving a first message, where the first message carries a low power indication, and the low power indication is used to indicate performing low power location request procedure; and
transmitting a paging message to a user equipment (UE), where the paging message carries the low power indication.

According to the method for low power positioning provided by an embodiment of the present application, the method further includes:
transmitting a second message to a first network function, where the second message carries at least one of the following: first capability information, a low power location request message, or the low power indication,
where the first capability information is used to indicate that the UE supports the low power location request procedure.

According to the method for low power positioning provided by an embodiment of the present application, the method further includes:
receiving a second reply message from the first network function, where the second reply message carries low power positioning configuration information.

An embodiment of the present application further provides a method for low power positioning, performed by a user equipment (UE), including:
determining a low power indication or low power configuration information; and performing low power location request procedure based on the low power indication or the low power configuration information;
   and/or
determining area information; and transmitting an event report to a first network function in case that the UE is inside an area indicated by the area information.

According to the method for low power positioning provided by an embodiment of the present application, performing the low power location request procedure includes:
performing the low power location request procedure in case that a trigger condition is satisfied,
where the trigger condition includes one of the following:
   the UE receives a paging message, where the paging message carries the low power indication; or
   the UE performs mobile originated location request.

According to the method for low power positioning provided by an embodiment of the present application, performing the low power location request procedure includes:
performing location measurement in an idle state or in an inactive state.

According to the method for low power positioning provided by an embodiment of the present application, the method further includes:
transmitting a second message to the first network function, where the second message carries at least one of the following: first capability information, a low power location request message, or the low power indication,
where the first capability information is used to indicate that the UE supports the low power location request procedure.

According to the method for low power positioning provided by an embodiment of the present application, the method further includes:
receiving a second reply message from the first network function, where the second reply message carries low power positioning configuration information.

An embodiment of the present application further provides a method for low power positioning, performed by a third network function, including:
transmitting low power positioning configuration information and/or area information to a user equipment (UE), where the area information is used to indicate an area inside which the UE is allowed to transmit an event report.

According to the method for low power positioning provided by an embodiment of the present application, before transmitting the low power positioning configuration information and/or the area information to the UE, the method further includes:
determining to perform the low power location request procedure; or
receiving a first message from a first network function, where the first message carries a low power indication and/or the area information, the low power indication is used to indicate performing low power location request procedure, and the area information is used to indicate the area inside which the UE is allowed to transmit the event report; or
receiving a third message from the first network function, where the third message is used to request the low power positioning configuration information.

According to the method for low power positioning provided by an embodiment of the present application, transmitting the low power positioning configuration information to the UE includes one of the following:
directly transmitting the low power positioning configuration information to the UE;
transmitting a first reply message to a first network function, where the first reply message carries the low power positioning configuration information; or
transmitting a third reply message to a first network function, where the third reply message carries the low power positioning configuration information.

An embodiment of the present application further provides a first network function, including a memory, a transceiver and a processor,
where the memory is used for storing a computer program, the transceiver is used for transmitting and receiving data under control of the processor, and the processor is used for reading the computer program in the memory and performing the following operations:
transmitting a first message to a second network function or a third network function, where the first message carries a low power indication and/or area information, the low power indication is used to indicate performing low power location request procedure, and the area information is used to indicate an area inside which a user equipment (UE) is allowed to transmit an event report.

According to the first network function provided by an embodiment of the present application,
the processor is further used for: determining that first information carries the low power indication, where the first information includes at least one of the following: a UE capability, a client request message, a UE request message, an LCS QoS, UE subscription information, a serving cell of a UE, a network capability, an operator policy, an LCS client type or a service type; or
the processor is further used for: receiving a positioning request message from a fourth network function, where the positioning request message carries the low power indication.

According to the first network function provided by an embodiment of the present application, the processor is further used for:
receiving a second message from a UE or the second network function, where the second message carries at least one of the following: first capability information, a low power location request message, or the low power indication,
where the first capability information is used to indicate that the UE supports the low power location request procedure.

According to the first network function provided by an embodiment of the present application, the processor is further used for:
transmitting a second reply message to the UE or the second network function, where the second reply message carries low power positioning configuration information.

According to the first network function provided by an embodiment of the present application, the processor is further used for:
transmitting a third message to the third network function; and
receiving a third reply message from the third network function, where the third reply message carries the low power positioning configuration information.

An embodiment of the present application further provides a second network function, including a memory, a transceiver and a processor, where the memory is used for storing a computer program, the transceiver is used for transmitting and receiving data under control of the processor, and the processor is used for reading the computer program in the memory and performing the following operations:
receiving a first message, where the first message carries a low power indication, and the low power indication is used to indicate performing low power location request procedure; and
transmitting a paging message to a user equipment (UE), where the paging message carries the low power indication.

According to the second network function provided by an embodiment of the present application, the processor is further used for:
transmitting a second message to a first network function, where the second message carries at least one of the following: first capability information, a low power location request message, or the low power indication,
where the first capability information is used to indicate that the UE supports the low power location request procedure.

According to the second network function provided by an embodiment of the present application, the processor is further used for:
receiving a second reply message from the first network function, where the second reply message carries low power positioning configuration information.

An embodiment of the present application further provides a user equipment (UE), including a memory, a transceiver and a processor,
where the memory is used for storing a computer program, the transceiver is used for transmitting and receiving data under control of the processor, and the processor is used for reading the computer program in the memory and performing the following operations:
determining a low power indication or low power configuration information; and performing low power location request procedure based on the low power indication or the low power configuration information;
   and/or
determining area information; and transmitting an event report to a first network function in case that the UE is inside an area indicated by the area information.

According to the UE provided by an embodiment of the present application, performing the low power location request procedure includes:
performing the low power location request procedure in case that a trigger condition is satisfied,
where the trigger condition includes one of the following:
   the UE receives a paging message, where the paging message carries the low power indication; or
   the UE performs mobile originated location request.

According to the UE provided by an embodiment of the present application, performing the low power location request procedure includes:
performing location measurement in an idle state or in an inactive state.

According to the UE provided by an embodiment of the present application, the processor is further used for:
transmitting a second message to the first network function, where the second message carries at least one of the following: first capability information, a low power location request message, or the low power indication,
where the first capability information is used to indicate that the UE supports the low power location request procedure.

According to the UE provided by an embodiment of the present application, the processor is further used for:
receiving a second reply message from the first network function, where the second reply message carries low power positioning configuration information.

An embodiment of the present application further provides a third network function, including a memory, a transceiver and a processor,
where the memory is used for storing a computer program, the transceiver is used for transmitting and receiving data under control of the processor, and the processor is used for reading the computer program in the memory and performing the following operations:
transmitting low power positioning configuration information and/or area information to a user equipment (UE), where the area information is used to indicate an area inside which the UE is allowed to transmit an event report.

According to the third network function provided by an embodiment of the present application, the processor is further used for:
determining to perform the low power location request procedure; or
receiving a first message from a first network function, where the first message carries a low power indication and/or the area information, the low power indication is used to indicate performing low power location request procedure, and the area information is used to indicate the area inside which the UE is allowed to transmit the event report; or
receiving a third message from the first network function, where the third message is used to request the low power positioning configuration information.

According to the third network function provided by an embodiment of the present application, transmitting the low power positioning configuration information to the UE includes one of the following:
directly transmitting the low power positioning configuration information to the UE;
transmitting a first reply message to a first network function, where the first reply message carries the low power positioning configuration information; or
transmitting a third reply message to a first network function, where the third reply message carries the low power positioning configuration information.

An embodiment of the present application further provides an apparatus for low power positioning, including:
a first transmitting unit, used for transmitting a first message to a second network function or a third network function, where the first message carries a low power indication and/or area information, the low power indication is used to indicate performing low power location request procedure, and the area information is used to indicate an area inside which a user equipment (UE) is allowed to transmit an event report.

An embodiment of the present application further provides an apparatus for low power positioning, including:
a fourth receiving unit, used for receiving a first message, where the first message carries a low power indication, and the low power indication is used to indicate performing low power location request procedure; and
a fourth transmitting unit, used for transmitting a paging message to a user equipment (UE), where the paging message carries the low power indication.

An embodiment of the present application further provides an apparatus for low power positioning, including:
a second determining unit, used for determining a low power indication or low power configuration information; and a first performing unit, used for performing low power location request procedure based on the low power indication or the low power configuration information;
   and/or
a third determining unit, used for determining area information; and a sixth transmitting unit, used for transmitting an event report to a first network function in case that the UE is inside an area indicated by the area information.

An embodiment of the present application further provides an apparatus for low power positioning, including:
an eighth transmitting unit, used for transmitting low power positioning configuration information and/or area information to a user equipment (UE), where the area information is used to indicate an area inside which the UE is allowed to transmit an event report.

An embodiment of the present application further provides a processor-readable storage medium, where the processor-readable storage medium stores a computer program, and the computer program is used to cause a processor to perform steps of any of the methods for low power positioning described above.

In the methods and apparatuses for low power positioning, the network functions, the UE, and the storage medium provided by the embodiments of the present application, the first network function transmits the first message to the second network function or the third network function, where the first message carries the low power indication and/or the area information, the low power indication is used to indicate performing low power location request procedure, and the area information is information of the area inside which the UE is allowed to transmit the event report. The core network function determines to perform the low power location request procedure, and transmits a first message to the second network function or the third network function, to trigger the UE to perform the low power location request procedure, which reduces the interaction between a user equipment (UE) and a network and the time when the UE is in a connected state, and reduces the positioning power consumption. Low power location request procedure of the UE in the specific scenario or having the specific requirement can be supported, and strong practicality is achieved.

### BRIEF DESCRIPTION OF THE DRAWINGS

In order to illustrate the solutions in the embodiments of the present application or in the related art more clearly, the drawings used in the description of the embodiments or the related art are briefly described below. The drawings in the following description are only some embodiments of the present application, and other drawings may be obtained according to these drawings without any creative work for those skilled in the art.
FIG. 1 is a schematic diagram of a location service architecture;
FIG. 2 is a first schematic flowchart of a method for low power positioning according to an embodiment of the present application;
FIG. 3 is a schematic diagram of capability negotiation performed between a user equipment (UE) and a first network function according to an embodiment of the present application;
FIG. 4 is a schematic flowchart of a UE or a network function determining to trigger low power location request procedure according to an embodiment of the present application;
FIG. 5 is a schematic flowchart of a network providing low power positioning configuration information according to an embodiment of the present application;
FIG. 6 is a second schematic flowchart of a method for low power positioning according to an embodiment of the present application;
FIG. 7 is a third schematic flowchart of a method for low power positioning according to an embodiment of the present application;
FIG. 8 is a schematic diagram of a UE triggering low power location request procedure based on information received from a network according to an embodiment of the present application;
FIG. 9 is a fourth schematic flowchart of a method for low power positioning according to an embodiment of the present application;
FIG. 10 is a schematic flowchart of using low power configuration information to obtain UE measurement information and trigger low power location request procedure in a 5GC-MT-LR procedure according to an embodiment of the present application;
FIG. 11 is a schematic structural diagram of a first network function according to an embodiment of the present application;
FIG. 12 is a schematic structural diagram of a second network function according to an embodiment of the present application;
FIG. 13 is a schematic structural diagram of a UE according to an embodiment of the present application;
FIG. 14 is a schematic structural diagram of a third network function according to an embodiment of the present application;
FIG. 15 is a first schematic structural diagram of an apparatus for low power positioning according to an embodiment of the present application;
FIG. 16 is a second schematic structural diagram of an apparatus for low power positioning according to an embodiment of the present application;
FIG. 17 is a third schematic structural diagram of an apparatus for low power positioning according to an embodiment of the present application; and
FIG. 18 is a fourth schematic structural diagram of an apparatus for low power positioning according to an embodiment of the present application.

### DETAILED DESCRIPTION

Solutions in the embodiments of the present application are clearly and completely described in the following with reference to the accompanying drawings in the embodiments of the present application. These embodiments are only a part of the embodiments of the present application, and not all of the embodiments. All other embodiments obtained by a person of ordinary skill in the art based on the embodiments of the present application without any creative work belong to the scope of the present application.

The term "include" and any variation thereof in the description and claims of the present application are intended to cover non-exclusive inclusions. For example, procedures, methods, systems, products or devices including a series of steps or units may include other steps or units that are not clearly listed or other steps or units that are inherent to these procedures, methods, products or devices except those steps or units that are clearly listed.

The terms "first", "second", etc. in the description and claims of the present application are used to distinguish similar objects, and are not used to describe a specific order or sequence. It should be understood that the terms used in this mode may be interchangeable where appropriate, so that the embodiments of the present application can be implemented in an order other than those illustrated or described here, and the objects distinguished by "first" and "second" are generally of the same type, and the number of objects is not limited, for example, the first object can be one or more.

In the embodiments of the present application, terms such as "exemplary" or "for example" are used to indicate examples, illustrations or explanations. Any embodiment or design schemes described as "exemplary" or "for example" in the embodiments of the present application should not be interpreted as being more preferred or more advantageous than other embodiments or design schemes. Specifically, the use of terms such as "exemplary" or "for example" are intended to present relevant concepts in a specific mode.

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more, and other quantifiers are similar.

The solutions provided by the embodiments of the present application may be applied to a variety of systems, especially 5G systems. For example, the applicable systems may include a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These systems include a terminal device and a network device. The system may further include a core network parts, such as an evolved packet system (EPS), a 5G system (5GS), etc.

The terminal device involved in the embodiments of the present application may be a device that provides voice and/or data connectivity to a user, a handheld device with a wireless connection function, or other processing devices connected to a wireless modem. In different systems, the names of terminal devices may also be different. For example, in a 5G system, the terminal device may be called a user equipment (UE). A wireless terminal device may communicate with one or more core networks (CN) via a radio access network (RAN). The wireless terminal device may be a mobile terminal device, such as a mobile phone (or a "cellular" phone) and a computer with a mobile terminal device. For example, it may be a portable, pocket-sized, handheld, computer-built-in or vehicle-mounted mobile device that exchanges language and/or data with a radio access network. For example, they may be personal communication service (PCS) phones, cordless phones, session initiated protocol (SIP) phones, wireless local loop (WLL) stations, personal digital assistants (PDAs), and other devices. The wireless terminal device may also be referred to as a system, a subscriber unit, a subscriber station, a mobile station, a mobile, a remote station, an access point, a remote terminal device, an access terminal device, a user terminal device, a user agent, or a user device, which is not limited in the embodiments of the present application.

The network device involved in the embodiments of the present application may be a core network function or a RAN network function.

In an embodiment of the present application, a core network function (CN function) may include but is not limited to at least one of the following: a CN device, a CN node, a function of a CN, a CN function, a mobility management entity (MME), an access mobility management function (AMF), a session management function (SMF), a user plane function (UPF), a serving gateway (SGW), a public data network gateway (PDN GW), a policy control function (PCF), a policy and charging rules function (PCRF) unit, a serving GPRS support node (SGSN), a gateway GPRS support node (GGSN), an edge application server discovery function (EASDF), a unified data management (UDM), a unified data repository (UDR), and a home subscriber server (HSS), a centralized network configuration (CNC), a network repository function (NRF), a network exposure function (NEF), a local NEF (L-NEF), a binding support function (BSF), an application function.

In an embodiment of the present application, the RAN network function may include but is not limited to at least one of the following: a radio access network equipment, a radio access network node, a radio access network function, a radio access network unit, a 3GPP radio access network, a non-3GPP radio access network, a centralized unit (CU), a distributed unit (DU), a base station, an evolved Node B (eNB), a 5G base station (gNB), a radio network controller (RNC), a base station (Node B), a non-3GPP interworking function (N3IWF), an access controller (AC) node, an access point (AP) device, a wireless local area network (WLAN) node or a WiFi node, etc.

The base station may include multiple cells that provide services to a terminal. Depending on the specific application scenario, the base station may also be referred to as an access point, or may be a device in an access network that communicates with a wireless terminal device through one or more sectors on an air interface, or other names. The network device may be used to interchange received air frames with Internet Protocol (IP) packets, and serve as a router between the wireless terminal device and the rest of the access network, where the rest of the access network may include an IP communication network. The network device may also coordinate the attribute management of the air interface. For example, the network device involved in the embodiments of the present application may be a base transceiver station (BTS) in the global system for mobile communications (GSM) or code division multiple access (CDMA), or a network device (node B) in wide-band code division multiple access (WCDMA), or an evolutional network device (eNB or e-NodeB) in the long term evolution (LTE) system, a 5G base station (gNB) in the 5G network architecture (next generation system), or a home evolved node B (HeNB), a relay node, a home base station (femto), a pico base station (pico), etc., which is not limited in the embodiments of the present application. In some network structures, the network device may include a centralized unit (CU) node and a distributed unit (DU) node, and the centralized unit and the distributed unit may also be arranged geographically separately.

Network devices and terminal devices may each use one or more antennas for multi-input multi-output (MIMO) transmission. The MIMO transmission may be single user MIMO (SU-MIMO) or multi user MIMO (MU-MIMO). Depending on the form and the number of antenna combinations, MIMO transmission may be 2D-MIMO, 3D-MIMO, FD-MIMO or massive-MIMO, or may be diversity transmission, precoding transmission or beamforming transmission, etc.

Relevant contents involved in the present application are introduced firstly.

### 1) Location service architecture

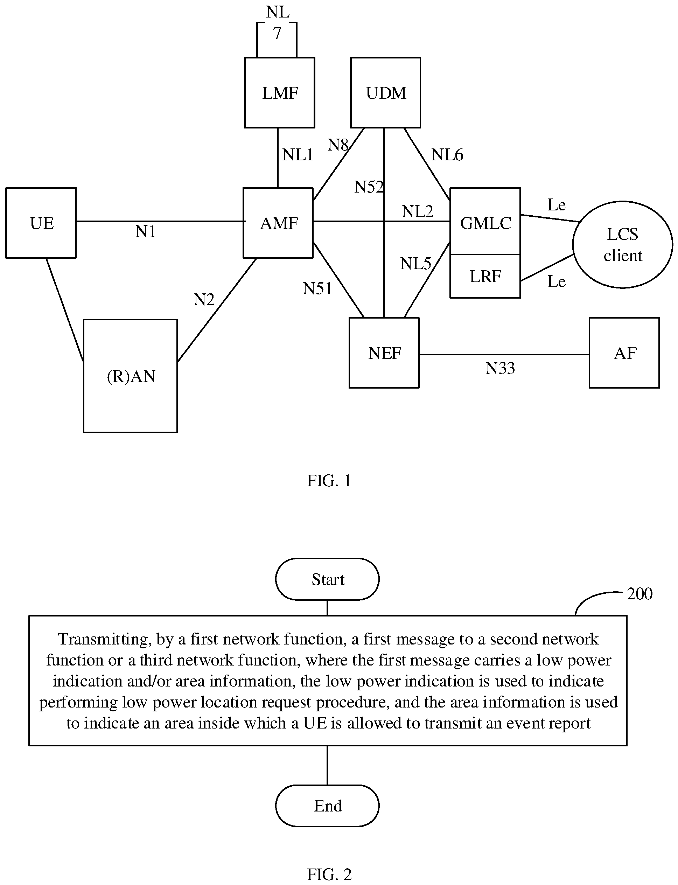

The location service architecture is shown in FIG. 1. Main functions of a user equipment (UE) and each network function in the location service architecture are briefly described as follows.

The UE obtains location measurement information based on a positioning request, calculates a location locally, or forwards the measurement information to a location management function (LMF) for location calculation. The LTE positioning protocol (LPP) of the 4G system is used between the UE and the LMF.

RAN participates the procedure of positioning the target UE, provides positioning-association information to the LMF, and transmits positioning messages between an access mobility management function (AMF) or the LMF and the target UE. The NR positioning protocol A (NRPPa) is used between the LMF and the gNB.

A gateway mobile location center (GMLC) is a first node accessed in case that an external location service (LCS) client accesses a public land mobile network (PLMN) when requesting a positioning service. The GMLC obtains routing information and a UE LCS privacy attribute from a UDM, performs a privacy check, and then forwards the positioning messages based on the routing information.

A location require function (LRF) provides the routing information for the UE that initiates an emergency session of the Internet multimedia subsystem (IMS) and can be co-located with the GMLC.

The UDM stores an LCS privacy setting of the UE and the routing information.

The AMF manages the positioning request received from the GMLC, an NEF or the UE, selects the LMF for the positioning request, and supports broadcasting of encrypted auxiliary data and storage of UE positioning capability.

The LMF is responsible for managing and scheduling resources required for UE positioning. When receiving the positioning request from the serving AMF, the LMF interacts with the UE and an access network to obtain positioning assistance information or location information. The LMF can decide to use a local coordinate system.

The NEF can open a location service to an application function (AF).

### 2) Low power location request procedure

In the related art, during a delayed 5GC mobile terminated location request (5GC-MT-LR), after the LMF transmits an event type and the association information to the UE, the UE can enter an RRC_INACTIVE state.

When the UE in the RRC_INACTIVE state monitors that an event occurs, the UE transmits an event notification to the LMF, which may include measurement information, and the LMF may also request an RAN node to provide the measurement information. The LMF calculates a UE location based on the measurement information, and then returns event report confirmation to the UE.

The RAN node may release a radio resource control (RRC) connection after transmitting the event report confirmation, and then the UE remains in the RRC_INACTIVE state.

Since the above procedures do not require the UE to enter a connected state, UE power consumption is reduced.

Related technologies for low power positioning are transparent to the core network, and cannot support low power location request procedure of UEs in specific scenarios, such as for UEs with specific subscriptions, specific LCS client types, or specific LCS qualities of service (QoS).

In the related art, the UE power consumption can be reduced only when reporting a delayed positioning event, but how to reduce UE power consumption in one-time positioning is not considered. In particular, how to reduce power consumption in one-time positioning of devices with limited movement ranges (such as vehicles and robotic arms that transport materials in factories) or static Internet of things (IoT) devices is not considered.

In order to solve the above problems, embodiments of the present application provide methods and apparatuses for low power positioning, network functions, a UE, and a storage medium, to solve the defect in the related art that low power location request procedure of a UE in a specific scenario or having a specific requirement cannot be supported.

The methods and the apparatuses are based on the same conception. Since the principles of solving the problem by the methods and the apparatuses are similar, the implementation of the apparatuses and the methods can refer to each other, and the repetition is not repeated.

FIG. 2 is a first schematic flowchart of a method for low power positioning according to an embodiment of the present application. As shown in FIG. 2, the method for low power positioning includes the following steps.

Step 200: transmitting, by a first network function, a first message to a second network function or a third network function, where the first message carries a low power indication and/or area information, the low power indication is used to indicate performing low power location request procedure, and the area information is used to indicate an area inside which a UE is allowed to transmit an event report.

It should be noted that in the embodiment of the present application, the first network function may be an AMF network function, or other CN network functions that can realize the function of the first network function in the embodiment of the present application. The following is an example of the first network function being an AMF network function.

The second network function may be a RAN network function. The third network function may be an LMF network function, or other CN network functions that can realize the function of the third network function in the embodiment of the present application.

In an embodiment, transmitting, by the first network function, the first message to the second network function includes: transmitting, by the AMF network function, the first message to the RAN network function. In an embodiment, the first message is a paging message, and the paging message carries the low power indication, and the low power indication is used to indicate performing low power location request procedure. The low power indication may also be referred to as a low power location request procedure indication, and the two have the same meaning in the present application.

The RAN network function receives the first message from the first network function, where the first message carries the low power indication. The RAN network function starts to page a UE and transmits the paging message to the UE, where the paging message carries the low power indication. The UE monitors the paging message and performs low power location request procedure according to the low power indication. That is, location measurement is performed in an idle state or an inactive state, and a measurement result is transmitted to the first network function.

In another embodiment, transmitting, by the first network function, the first message to the second network function includes: transmitting, by the AMF network function, the first message to the LMF network function. In an embodiment, the first message is a positioning request message, and the positioning request message is used to request the LMF network function to calculate a location of the UE. The first message carries the low power indication, and the low power indication is used to indicate performing low power location request procedure, to trigger the LMF network function to perform the low power location request procedure.

The LMF network function performing low power location request procedure includes at least one of the following: reducing the number of measurements, reducing measurement parameters, triggering the UE to perform the low power location request procedure, providing low power positioning configuration information, and calculating the location of the UE.

The low power positioning configuration information is the information required for the UE to perform the low power location request procedure, such as the number of measurements, the measurement parameters, a positioning method, etc.

In an embodiment, the first message transmitted from the AMF network function to the LMF network function further carries measurement information, where the measurement information is obtained by the UE performing low power location request procedure.

In an embodiment, the first network function transmits the first message to the second network function or the third network function, where the first message carries the area information, and the area information is used to indicate the area inside which the UE is allowed to transmit the event report.

In an embodiment, the UE is allowed to report the event report only when the UE is inside the area indicated by the area information.

The usage of the area information is described below through a specific embodiment.
1. An LCS client transmits a location request message to a GMLC network function, and the area information is carried. The area information indicates that the UE transmits the event report when the UE is inside the area.
2. The GMLC network function transmits the location request message to the AMF network function, and the area information is carried.
3. The AMF network function transmits the location request message to the LMF network function, and the area information is carried.
4. The LMF network function transmits an LCS periodic trigger call request message to the UE, and the area information is carried.
5. After the UE receives the information, when the UE finds that the event occurs (for example, a positioning period is arrived, or a moving distance of the UE exceeds a specific length), the UE performs location measurement, location calculation, and transmits the event report to a network only when the UE is inside the area indicated by the above area information.

It should be noted that when the UE monitors that the event occurs, the UE performs location measurement, location calculation, and transmits the event report to the network only when the UE is inside the area indicated by the above area information, to avoid the UE from performing the above operations every time the event occurs, which reduces power consumption.

In an embodiment of the present application, the first network function transmits the first message to the second network function or the third network function, where the first message carries the low power indication and/or the area information, the low power indication is used to indicate performing low power location request procedure, the area information is information of the area inside which the UE is allowed to transmit the event report. The core network function determines to perform the low power location request procedure, and transmits the first message to the second network function or the third network function, to trigger the UE to perform the low power location request procedure, which reduces the interaction between a user equipment (UE) and a network and the time when the UE is in a connected state, and reduces the power consumption for positioning. Low power location request procedure of the UE in the specific scenario or having the specific requirement can be supported, and strong practicality is achieved.

In an embodiment, before transmitting, by the first network function, the first message to the second network function or the third network function, the method further includes:
determining that the first information carries the low power indication, where the first information includes at least one of the following: a UE capability, a client request message, a UE request message, an LCS QoS, UE subscription information, a serving cell of a UE, a network capability, an operator policy, an LCS client type or a service type.

In an embodiment, the triggering of the low power location request procedure is determined by the first network function. The first network function determines the triggering of low power location request procedure based on one or more pieces of the following information.
1) A UE capability: a capability to support low power location request procedure.
2) A client request message: the client request message includes an AF/LCS client request message. That is, the AF/LCS client provides low power association information, which may be a newly defined parameter or included in a relevant LCS QoS (for low power location request procedure).
3) A UE request message: UE provides low power association information, which may be a newly defined parameter or included in the relevant LCS QoS.
4) An LCS QoS: the LCS QoS includes the low power association information.
5) Terminal subscription information: for example, low power subscription information. An LCS privacy attribute includes the low power indication.
6) A serving cell of the UE.
7) A network capability: the capability indicating that RAN network function and the core network function in a network device support the low power location request procedure.
8) An operator policy.
9) An LCS client type: for example, a specific LCS client type (such as an LCS client used by the public security).
10) A service type: for example, a non-emergency service.
11) Terminal information: such as power, an upper-layer application request, environment, etc.

In an embodiment of the present application, the first network function determines to perform the low power location request procedure based on the first information. Compared with the related art, in which only the RAN network function can determine whether to perform the low power location request procedure, low power location request procedure of UEs in specific scenarios or with specific requirements can be supported.

In the method for low power positioning provided by the embodiment of the present application, whether to perform the low power location request procedure may also be determined by the UE or other network functions, for example, the second network function (such as the RAN network function), the third network function (such as the LMF network function), or the fourth network function (such as the GMLC network function).

Decision points for low power location request procedure are different, and the low power indication needs to be transmitted between different NFs.
a) In case that it is decided by the GMLC network function, the GMLC network function transmits the low power indication to the AMF network function, and the AMF network function transmits the low power indication to the LMF network function.
b) In case that it is decided by the AMF network function, the AMF network function transmits the low power indication to the LMF network function.
c) In case that it is decided by the UE, the UE transmits the low power indication to the AMF network function, and the AMF network function transmits the low power indication to the LMF network function.
d) In case that it is decided by the LMF network function, the LMF network function transmits the low power indication to the UE or the RAN node.

The impact on network function selection caused by supporting low power location request procedure are as follows.
a) When the GMLC network function selects the AMF network function, the AMF network function that supports the low power location request procedure capability is selected. The GMLC network function is locally configured with a capability of the AMF network function or a capability of obtaining the AMF network function from the NRF network function.
b) When the AMF network function selects the LMF network function, the LMF network function that supports the low power location request procedure capability is selected. The AMF network function is locally configured with a capability of the LMF network function or a capability of obtaining the LMF network function from the NRF network function.
c) When the RAN node selects the AMF network function, the AMF network function that supports the low power location request procedure capability is selected. An AN parameter transmitted from the UE to the RAN node includes the low power indication.

After the LMF network function receives the low power indication, the LMF network function may reduce the number of measurements and trigger the procedure of reducing power consumption such as IDLE or RRC_INACTIVE positioning, etc. For devices with limited movement ranges (such as vehicles and robotic arms that transport materials in factories) or static IoT devices, the present application provides the low power positioning configuration information to these devices in advance, and the above-mentioned UE may perform location measurements in an idle state or an inactive state by using the low power positioning configuration information. The interaction between the UE and the network is reduced, the time when the UE is in the connected state is reduced, and the positioning power consumption is reduced.

In an embodiment, before the first network function transmits the first message to the second network function or the third network function, the method further includes:
receiving a positioning request message from a fourth network function, where the positioning request message carries a low power indication.

It should be noted that the fourth network function may be the GMLC network function.

The fourth network function may receive the low power indication from the LCS client, and the low power indication may be a newly defined parameter or an existing parameter.

If the existing parameter is used, an additional possible value or a new sub-parameter may be defined for the existing parameter. For example, a low power location request procedure parameter may be introduced in an LCS QoS parameter, or a possible value of a new service type or a new LCS client type (such as low power location request procedure) may be defined.

The first network function receives the positioning request message from the fourth network function, and the positioning request message carries the low power indication, and then the first network function transmits the first message to the second network function or the third network function, to transmit the low power indication between different NFs.

It should be noted that if the positioning request message received by the first network function from the fourth network function does not carry the low power indication, the first network function determines that the first information carries the low power indication.

In an embodiment, before the first network function transmits the first message to the second network function or the third network function, the method further includes:
receiving, by the first network function, a second message from a UE or the second network function, where the second message carries at least one of the following: first capability information, a low power location request message, or the low power indication.

In an embodiment, the second network function transmits the second message to the first network function, which means forwarding the second message transmitted from the UE.

In an embodiment, before the first network function transmits the first message to the second network function or the third network function, the first network function receives the second message from the UE or the second network function, where the second message carries the first capability information.

The first capability information is used to indicate that the UE supports the low power location request procedure.

Before the first network function transmits the low power indication, the UE performs capability negotiation with the first network function.

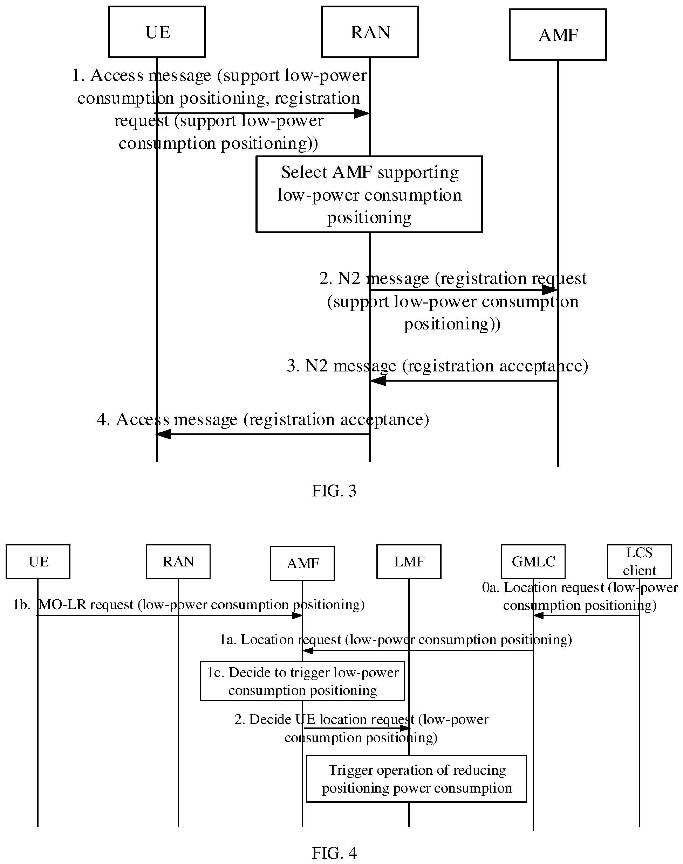

FIG. 3 is a schematic diagram of capability negotiation performed between a user equipment (UE) and a first network function according to an embodiment of the present application. As shown in FIG. 3, the procedure of negotiating capabilities between the UE and the first network function includes the following steps.

Step 1. The UE transmits an access message to the RAN node, where the access message carries a registration request message and first capability information (optional). The registration request message carries the first capability information. The RAN node selects the AMF that supports low power location request procedure based on the capability of the UE for supporting the low power location request procedure.

Step 2. The RAN node transmits an N2 message to the AMF, where the message carries the registration request message of step 1.

Step 3. The AMF transmits the N2 message to the RAN node, where the message carries a registration acceptance message. The AMF may carry acceptance/rejection for the low power location request procedure in the registration acceptance message. For example, the AMF determines whether have a capability to provide a low power location request procedure service for the UE based on its own capability, a network capability, a UE subscription, or a network policy, etc.

Step 4. The RAN node transmits an access reply message to the UE, where the access reply message carries the registration acceptance message. The registration acceptance message carries first indication information, where the first indication information is used to indicate an acceptance for the low power location request procedure or a rejection for the low power location request procedure.

In an embodiment, before the first network function transmits the first message to the second network function or the third network function, the first network function receives the second message from the UE or the second network function, where the second message carries the low power location request message.

In an embodiment of the present application, the low power location request message is used to request to perform the low power location request procedure, or to request information required for performing the low power location request procedure.

In an embodiment, the UE or the second network function transmits the low power location request message to the first network function, and the first network function receives the low power location request message and transmits the first message to the second network function or the third network function, to realize transmission of the low power indication between NFs, which can trigger the UE to perform the low power location request procedure.

In an embodiment, before the first network function transmits the first message to the second network function or the third network function, the first network function receives the second message from the UE or the second network function, where the second message carries the low power indication.

The UE or the second network function transmits the second message to the first network function, where the second message carries the low power indication, which may be a newly defined parameter or an existing parameter. If the existing parameter is used, a new possible value or a new sub-parameter may be defined for the existing parameter. For example, a low power location request procedure parameter may be introduced in an LCS QoS parameter, or a possible value of a new service type or a new LCS client type (such as low power location request procedure) may be defined.

In an embodiment, before the first network function transmits the first message to the second network function or the third network function, the first network function receives the second message from the UE or the second network function, where the second message carries at least two pieces of the first capability information, the low power location request message or the low power indication.

It should be noted that if the second message received by the first network function from the UE or the second network function does not carry the low power indication, the first network function determines that the first information carries the low power indication.

FIG. 4 is a schematic flowchart of a UE or a network function determining to trigger low power location request procedure according to an embodiment of the present application. As shown in FIG. 4, the procedure of the UE or network function determines to trigger the low power location request procedure includes the following steps.

Step 1. The AMF receives the low power location request message (i.e., a mobile originating location request (MO-LR) message in 1b, FIG. 4) from the UE or receives the positioning request message (i.e., a location request message in 0a, FIG. 4) from the GMLC, and the message carries the low power indication. The GMLC receives the low power indication from the LCS client. The low power indication may be a newly defined parameter or an existing parameter. If the existing parameter is used, a new possible value or a new sub-parameter may be defined for this parameter. For example, a low power location request procedure parameter may be introduced in an LCS QoS parameter, or a possible value of a new service type or a new LCS client type (such as low power location request procedure) may be defined.

In an embodiment, step 1a and step 1b do not carry the low power location request procedure indication, and the AMF decides to trigger the low power location request procedure. For example, the AMF may make a decision based on parameters such as a UE capability, a UE subscription, a network capability, an operator policy, a serving cell of UE, an LCS client type, or a service type.

Step 2. The AMF transmits a first message (here it is a deciding UE location request message) to the LMF, where the first message carries the low power indication. If the LMF does not receive the low power indication from the AMF, the LMF may also determine to perform the low power location request procedure based on, for example, an LCS QoS, an LCS client type, a service type, a UE capability, an operator policy, a serving cell of UE, etc. A low power location request procedure operation is triggered by the LMF, such as an operation of reducing measurement parameters, or an operation of triggering RRC_INACTIVE positioning, etc.

In an embodiment, in case that the second message received by the first network function from the UE or the second network function does not carry the low power indication, or the positioning request message received by the first network function from the fourth network function does not carry the low power indication, the first network function determines that the first information carries the low power indication; and in case that the third network function does not receive the low power indication from the first network function, the third network function may also determine whether to perform the low power location request procedure. In an embodiment, the third network function determines to perform the low power location request procedure based on the first information. The first information may be referred to the description in the aforementioned embodiments, which is not repeated here.

In an embodiment, the method further includes:
transmitting a second reply message to the UE or the second network function, where the second reply message carries low power positioning configuration information.

In an embodiment, after the second network function receives the first message transmitted from the first network function, the second network function pages the UE, and then the UE monitors the paging and performs the low power location request procedure. After the third network function receives the first message transmitted from the first network function, the third network function triggers the UE to perform the low power location request procedure.

In the embodiment of the present application, the UE performs the low power location request procedure based on the low power positioning configuration information obtained in advance. The low power positioning configuration information is the information required by the UE to perform the low power location request procedure.

The embodiment of the present application focuses on the network providing the low power positioning configuration information to the UE in advance. After the UE enters the idle (IDLE) state or the inactive state (RRC_INACTIVE), when the UE needs to be positioned, the UE performs location measurement based on the low power positioning configuration information received from the network, and then provides the measurement result to the network through a service request message. The LMF calculates the location of the UE and transmits the result to the UE through a service accept message. Then, the UE enters the IDLE state again. In this method, the low power positioning configuration information is provided to the UE in advance, and the UE may perform location measurement in the IDLE state or RRC_INACTIVE state. In the embodiment of the present application, by reducing the interaction between the UE and the network and reducing the time when the UE is in the connected state, the positioning power consumption is reduced.

After the first network function receives the second message from the UE or the second network function, the first network function transmits the second reply message to the UE or the second network function, where the second reply message carries the low power positioning configuration information.

In an embodiment, before transmitting the second reply message to the UE or the second network function, the method further includes:
transmitting a third message to the third network function; and
receiving a third reply message from the third network function, where the third reply message carries the low power positioning configuration information.

In an embodiment, the first network function obtains the low power positioning configuration information from the third network function. The first network function transmits the third message to the third network function, where the third message is used to request the low power positioning configuration information.

In an embodiment, the third message carries at least one of the following: the low power location request message, the low power indication, an action area of the UE, or a serving cell of the UE.

The third network function responds to the third message and provides the low power positioning configuration information. The first network function receives the third reply message from the third network function, where the third reply message carries the low power positioning configuration information.

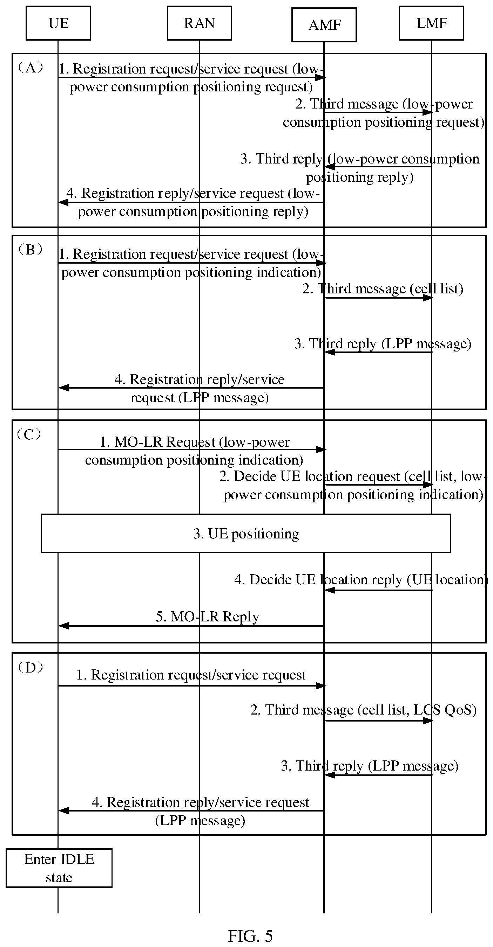

For the procedure of the network (the third network function) providing the low power positioning configuration information, FIG. 5 may be referred, which is a schematic flowchart of a network providing low power positioning configuration information according to an embodiment of the present application. The procedure of the network providing low power positioning configuration information includes the following four possible modes. After executing any of these modes, the UE may enter the IDLE state.

Mode (A) Based on a registration/service request procedure, the UE requests to obtain a configuration required to reduce the positioning power consumption from the network.
1. The UE transmits a registration request message or a service request message to the AMF network function, where the registration request message or the service request message carries the low power location request message.
2. The AMF network function transmits a third message to the LMF network function, where the third message carries at least one of the following: a low power location request message, a low power indication, an action area of the UE, or a serving cell of the UE.
3. The LMF network function transmits a third reply message to the AMF network function, where the third reply message carries the low power positioning configuration information. The low power positioning configuration information includes a positioning method, the number of measurements, or a required location measurement, etc.
4. The AMF network function transmits a registration reply message or a service acceptance message to the UE, where the registration reply message or the service acceptance message carries the low power positioning configuration information.

Mode (B) The AMF triggers the LMF to determine the low power positioning configuration information, which is different from (A). In (A), the AMF transparently transmits messages between the UE and the LMF.
1. The UE transmits a registration request message or a service request message to the AMF network function, where the registration request message or the service request message carries the low power location request procedure indication.
2. The AMF network function transmits a third message to the LMF network function, where the third message carries at least one of the following: a low power location request message, a low power indication, an action area of the UE, or a serving cell of the UE.
3. The LMF network function transmits a third reply message to the AMF network function, where the third reply message carries an LPP message. The LPP message carries the low power positioning configuration information, where the low power positioning configuration information includes a positioning method, the number of measurements, or a required location measurement, etc.
4. The AMF network function transmits a registration reply message or a service acceptance message to the UE, where the registration reply message or the service acceptance message carries the LPP message.

Mode (C) has similar idea with that of (A), except that in (C), the UE obtains the low power positioning configuration information from the LMF through a relevant 5GC-MO-LR procedure.
1. The UE transmits an MO-LR message to the AMF network function, where the MO-LR message carries the low power location request procedure indication.
2. The AMF network function transmits a third message (deciding UE location request message) to the LMF network function, where the third message carries at least one of the following: a low power location request message, a low power indication, an action area of the UE, or a serving cell of the UE.
3. (Optional) LMF may trigger the positioning procedure for the UE, in which the low power positioning configuration information is provided to the UE through the LPP message.
4. The LMF network function transmits a third reply message to the AMF network function, where the third reply message carries the low power positioning configuration information (in case that step 3 is not performed).
5. The AMF network function transmits an MO-LR reply message to the UE, where the MO-LR reply message carries the low power positioning configuration information.

Mode (D) The AMF decides to obtain the low power location request procedure configuration from the LMF and transmits it to the UE.
1. The UE transmits a registration request message or a service request message to the AMF network function.
2. The AMF network function transmits a third message to the LMF network function, where the third message carries at least one of the following: a low power location request message, a low power indication, an action area of the UE, or a serving cell of the UE.
3. The LMF network function transmits a third reply message to the AMF network function, where the third reply message carries an LPP message. The LPP message carries the low power positioning configuration information.
4. The AMF network function transmits a registration reply message or a service acceptance message to the UE, where the registration reply message or the service acceptance message carries the low power positioning configuration information. The configuration may be the LPP message, a transparent container, or a newly defined parameter.

In the embodiment of the present application, the core network decides whether to perform the low power location request procedure, and low power location request procedure in specific scenarios is supported. For example, low power location request procedure for a specific subscribed UE, a specific LCS client type, or a specific LCS QoS is supported. In the present application, the low power positioning configuration information may be provided to the UE (such as a UE with limited movement ranges or a stationary UE), and then the UE uses the low power positioning configuration information to perform the location measurement in an idle state or an inactive state, which reduces the interaction between UE and network and the time when the UE is in the connected state, and reduces the positioning power consumption.

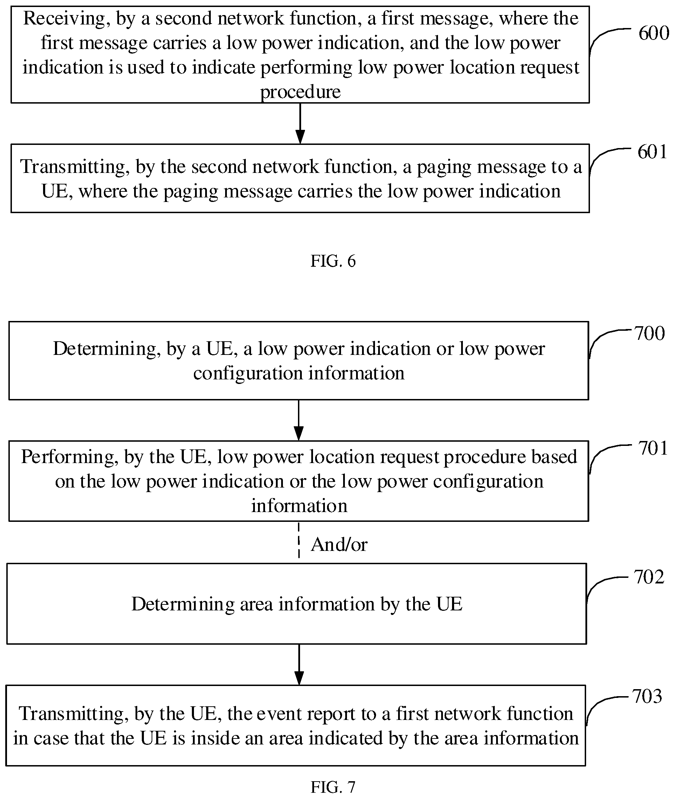

FIG. 6 is a second schematic flowchart of a method for low power positioning according to an embodiment of the present application. As shown in FIG. 6, the method for low power positioning includes the following steps.

Step 600: receiving, by a second network function, a first message, where the first message carries a low power indication, and the low power indication is used to indicate performing low power location request procedure.

Step 601: transmitting, by the second network function, a paging message to a UE, where the paging message carries the low power indication.

The second network function may be a RAN network function.

The second network function receives the first message from the first network function, where the first message carries the low power indication. The second network function starts to page the UE and transmits the paging message to the UE, where the paging message carries the low power indication. The UE monitors the paging message and performs the low power location request procedure based on the low power indication. That is, the UE performs the location measurement in an idle state or an inactive state, and transmits the measurement result to the first network function.

In an embodiment of the present application, the second network function receives the first message from the first network function, where the first message carries the low power indication. The low power indication is used to indicate performing the low power location request procedure. The first network function determines to perform the low power location request procedure and transmits the low power indication to the second network function, to trigger the UE to perform the low power location request procedure, which reduces the interaction between the UE and the network and the time when the UE is in a connected state, reduces the positioning power consumption, being capable of supporting the low power location request procedure of UEs in specific scenarios or with specific requirements, and having strong practicality.

In an embodiment, the method further includes:
transmitting a second message to a first network function, where the second message carries at least one of the following: first capability information, a low power location request message, or the low power indication,
where the first capability information is used to indicate that the UE supports the low power location request procedure.

In an embodiment, the second network function receives an access message from the UE, where the access message carries a supporting registration request message and first capability information (optional). The registration request message carries the first capability information. The RAN node selects an AMF that supports low power location request procedure based on the capability of the UE for supporting the low power location request procedure, and then transmits the first capability information to the first network function.

In an embodiment, the second network function receives the low power location request message from the UE, and forwards the low power location request message to the first network function.

In an embodiment, the UE determines to perform the low power location request procedure, the second network function receives a low power indication from the UE, the RAN node selects an AMF that supports the low power location request procedure, and forwards the low power indication to the first network function.

In an embodiment, the second network function receives the second message from the UE, the second message carries at least two of the first capability information, the low power location request message or the low power indication, and forwards the second message to the first network function.

In an embodiment, the method further includes:
receiving a second reply message from the first network function, where the second reply message carries low power positioning configuration information.

In an embodiment, the first network function obtains the low power positioning configuration information, and transmits the low power positioning configuration information to the UE through the second network function by using the second reply message. After the second network function receives the second reply message, the second network function transmits the low power positioning configuration information to the UE.

In the embodiment of the present application, the core network decides whether to perform the low power location request procedure, and low power location request procedure in specific scenarios is supported. For example, low power location request procedure for a specific contracted UE, a specific LCS client type, or a specific LCS QoS is supported. In the present application, the low power positioning configuration information may be provided to the UE (such as a UE with limited movement ranges or a stationary UE), and then the UE uses the low power positioning configuration information to perform the location measurement in an idle state or an inactive state, which reduces the interaction between UE and network and the time when the UE is in the connected state, and reduces the positioning power consumption.

FIG. 7 is a third schematic flowchart of a method for low power positioning according to an embodiment of the present application. As shown in FIG. 7, the method for low power positioning includes the following step 700 and step 701.

Step 700: determining, by a UE, a low power indication or low power configuration information.

It should be noted that, in the embodiment of the present application, the meaning of determination includes operations such as receiving, obtaining, and deciding based on local information.

Step 701: performing, by the UE, low power location request procedure based on the low power indication or the low power configuration information.

Performing, by the UE, low power location request procedure includes: performing, by the UE, location measurement in an idle state or an inactive state, and transmitting a measurement result to the first network function. The first network function transmits the measurement result to the third network function, and then the third network function can calculate the UE location based on the measurement result.

It should be noted that the measurement result, the measurement information and a measurement amount have the same meaning.

In the embodiment of the present application, the UE performs the location measurement in an idle state or an inactive state, which reduces the interaction between UE and network and the time when the UE is in the connected state, and reduces the positioning power consumption.

And/or the method for low power positioning includes the following step 702 and step 703.

Step 702: determining area information by the UE.

The area information is used to indicate an area inside which the UE is allowed to transmit an event report.

Step 703: transmitting, by the UE, the event report to a first network function in case that the UE is inside an area indicated by the area information.

In an embodiment, the UE obtains the area information from the third network function, and transmits the event report to the first network function when the UE is inside the area indicated by the area information.

For understanding of the area information, reference may be made to the description of the method embodiment performed by the first network function, which is not repeated here.

In an embodiment, performing the low power location request procedure includes:
performing the low power location request procedure in case that a trigger condition is satisfied,
where the trigger condition includes one of the following:
   the UE receives a paging message, where the paging message carries the low power indication; or
   the UE performs mobile originated location request.

The paging message comes from the second network function.

The UE performs the mobile originated location request, which means that the UE requests its own location information. For example, location information of the UE is required when executing certain third-party applications.

When the above trigger condition is satisfied, the UE performs the location measurement in an idle state or an inactive state.

In an embodiment, performing, by the UE, the low power location request procedure based on the low power indication includes:
performing, by the UE, location measurement in an idle state or in an inactive state based on the low power indication according to low power configuration information.

In an embodiment of the present application, in case that the network determines that a low power location request procedure service may be provided, before the UE performs the low power location request procedure, the low power positioning configuration information is provided to the UE, and then the UE may perform the location measurement in an idle state or an inactive state based on the low power positioning configuration information. The interaction between the UE and the network is reduced, the time when the UE is in the connected state is reduced, and the positioning power consumption is reduced.

In an embodiment, the method further includes:
transmitting a second message to a first network function, where the second message carries at least one of the following: first capability information, a low power location request message, or the low power indication,
where the first capability information is used to indicate that the UE supports the low power location request procedure.

Before the first network function transmits the low power indication, the UE performs capability negotiation with the first network function. The procedure of capability negotiation between the UE and the first network function may be referred to the description in the aforementioned embodiments, which is not repeated here.

In an embodiment, the UE receives an upper-layer positioning request message and transmits the low power location request message to the first network function.

In an embodiment, the UE receives the upper-layer positioning request message (the upper-layer positioning request message is used to request UE location information) or performs mobile originated location request, determines to perform the low power location request procedure based on the first information, and then transmits the low power indication to the first network function.

In an embodiment, the first network function receives the low power indication transmitted from the UE, and determines again whether the low power location request procedure service may be provided based on the first information.

In an embodiment, the method further includes:
receiving a second reply message from the first network function, where the second reply message carries low power positioning configuration information.

The procedure of the UE obtaining the low power positioning configuration information may be referred to the description in the aforementioned embodiments performed by the first network function, which is not repeated here.

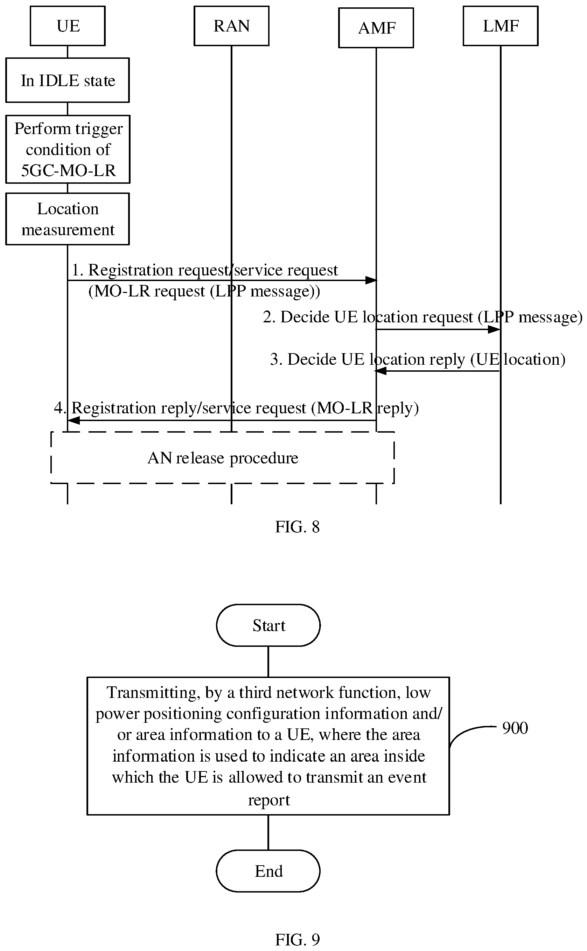

FIG. 8 is a schematic diagram of a UE triggering low power location request procedure based on information received from a network according to an embodiment of the present application. As shown in FIG. 8, the following steps are included.

The UE in the IDLE state receives a positioning request message from the upper-layer application, and the UE performs location measurement based on the low power positioning configuration information received in advance.

Step 1. The UE transmits a registration request/service request message to the AMF network function, where the registration request/service request message carries an MO-LR message (that is, an LPP message). The LPP message carries the information for UE measurement. The UE may also provide a low power indication. The low power indication may be in the registration request/service request message or in the MO-LR message.

Step 2. The AMF network function transmits a deciding UE location request message to the LMF network function, which carries the LPP message. The LMF network function calculates the UE location based on the measurement information provided by the UE.

Step 3. The LMF network function transmits a deciding UE location reply message to the AMF network function, which carries the UE location.

Step 4. The AMF network function returns a registration acceptance/service acceptance message to the UE, which carries an MO-LR reply message.

If the AMF network function receives the low power indication in step 1, the AMF network function initiates an AN release procedure to make the UE enters an IDLE state. Or, the UE triggers an RRC release procedure and enters an IDLE state.

In the embodiment of the present application, the core network decides whether to perform the low power location request procedure, and low power location request procedure in specific scenarios is supported. For example, low power location request procedure for a specific contracted UE, a specific LCS client type, or a specific LCS QoS is supported. In the present application, the low power positioning configuration information may be provided to the UE (such as a UE with limited movement ranges or a stationary UE), and then the UE uses the low power positioning configuration information to perform the location measurement in an idle state or an inactive state, which reduces the interaction between UE and network and the time when the UE is in the connected state, and reduces the positioning power consumption.

FIG. 9 is a fourth schematic flowchart of a method for low power positioning according to an embodiment of the present application. As shown in FIG. 9, the method for low power positioning includes the following steps.

Step 900: transmitting, by a third network function, low power positioning configuration information and/or area information to a UE, where the area information is used to indicate an area inside which the UE is allowed to transmit an event report.

In an embodiment of the present application, the third network function transmits the low power positioning configuration information to the UE, and then the UE performs the location measurement in an idle state or an inactive state based on the low power positioning configuration information, which reduces the interaction between UE and network and the time when the UE is in the connected state, and reduces the positioning power consumption.

In an embodiment, the third network function transmits an LCS periodic trigger call request message to the UE, which carries the area information. After the UE receives the information, when the UE finds that the event occurs (for example, a positioning period is arrived, or a moving distance of the UE exceeds a specific length), the UE performs location measurement, location calculation, and transmits the event report to a network only when the UE is inside the area indicated by the above area information, to avoid the UE from performing the above operations every time the event occurs, which reduces power consumption.

In an embodiment, before transmitting, by the third network function, the low power positioning configuration information to the UE, the method further includes:
determining, by the third network function, to perform the low power location request procedure; or
receiving, by the third network function, a first message from a first network function, where the first message carries a low power indication and/or the area information, the low power indication is used to indicate performing low power location request procedure, and the area information is used to indicate the area inside which the UE is allowed to transmit the event report; or
receiving, by the third network function, a third message from the first network function, where the third message is used to request the low power positioning configuration information.

In an embodiment, if the third network function does not receive the first message from the first network function, the third network function may determine whether to perform the low power location request procedure.

In an embodiment, the third network function determines to perform the low power location request procedure based on the first information. The first information may be referred to the description in the aforementioned embodiments, which is not repeated here.

In an embodiment, the third network function receives the first message from the first network function, where the first message carries the low power indication, and the low power indication is used to indicate performing the low power location request procedure.

In an embodiment, the third network function receives the first message from the first network function, where the first message carries the area information, and the area information is used to indicate the area inside which the UE is allowed to transmit the event report.

Then the third network function transmits the area information to the UE.

After the LMF network function receives the low power indication, the LMF network function may reduce the number of measurements and trigger the procedure of reducing power consumption such as IDLE or RRC_INACTIVE positioning, or provide the low power positioning configuration information, etc. In particular, for devices with limited movement ranges (such as vehicles and robotic arms that transport materials in factories) or static IoT devices, the present application provides the low power positioning configuration information to these devices in advance, and the above-mentioned UE may perform location measurements in an idle state or an inactive state by using the low power positioning configuration information. The interaction between the UE and the network is reduced, the time when the UE is in the connected state is reduced, and the positioning power consumption is reduced.

In an embodiment, the third network function receives the third message from the first network function, where the third message is used to request the low power positioning configuration information. The third network function returns the low power positioning configuration information in response to the third message.

In an embodiment, the third message carries at least one of the following: a low power location request message, a low power indication, an action area of the UE, or a serving cell of the UE.

In an embodiment, the third network function determines the low power positioning configuration information based on information such as the active area of the UE and the serving cell of the UE, etc.

In an embodiment, transmitting, by the third network function, the low power positioning configuration information to the UE includes one of the following:
directly transmitting, by the third network function, the low power positioning configuration information to the UE;
transmitting, by the third network function, a first reply message to a first network function, where the first reply message carries the low power positioning configuration information; or
transmitting, by the third network function, a third reply message to a first network function, where the third reply message carries the low power positioning configuration information.

In the embodiment of the present application, it is achieved that the core network decides whether to perform the low power location request procedure, and low power location request procedure in specific scenarios is supported. For example, low power location request procedure for a specific contracted UE, a specific LCS client type, or a specific LCS QoS is supported. In the present application, the low power positioning configuration information may be provided to the UE (such as a UE with limited movement ranges or a stationary UE), and then the UE uses the low power positioning configuration information to perform the location measurement in an idle state or an inactive state, which reduces the interaction between UE and network and the time when the UE is in the connected state, and reduces the positioning power consumption.

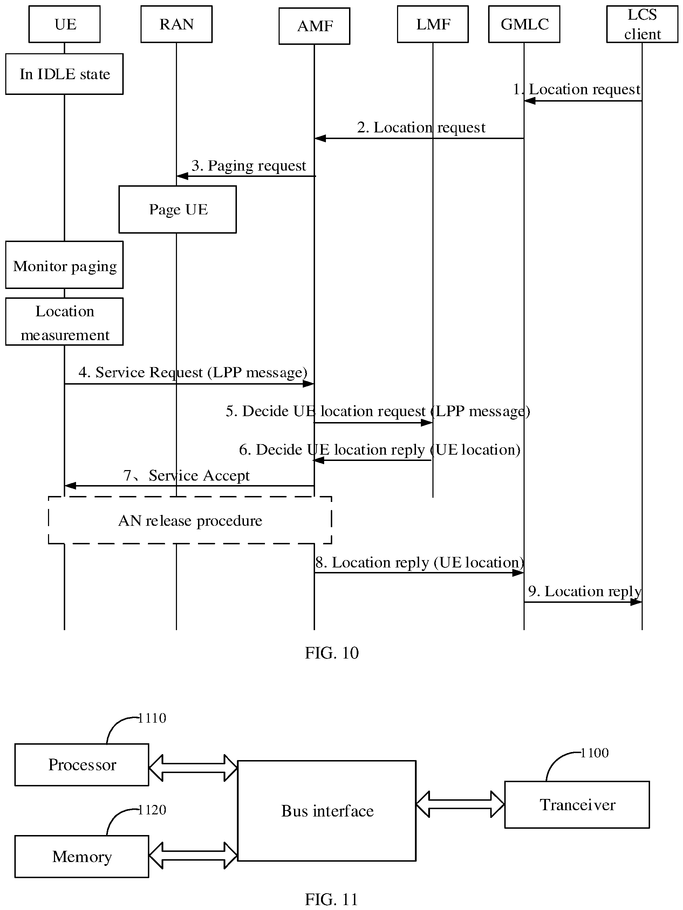

FIG. 10 is a schematic flowchart of using low power configuration information to obtain UE measurement information and trigger low power location request procedure in a 5GC-MT-LR procedure according to an embodiment of the present application. As shown in FIG. 10, the following steps are included.

Step 1. The LCS client transmits a positioning request message (i.e., the location request in FIG. 10) to the GMLC network function to request the UE location information, and the LCS client type may be optionally carried in the positioning request message.

Step 2. The GMLC network function transmits the positioning request message to the AMF network function.

Step 3. The AMF network function transmits a paging request to the RAN node. The RAN node starts paging the UE. The paging message may carry the low power indication. The UE monitors the paging, and based on the low power indication, the UE performs the location measurement based on the low power positioning configuration information.

Step 4. The UE transmits a service request message, where the service request message carries an LPP message. The LPP message carries the measurement information and the low power indication.

Step 5. The AMF network function transmits a deciding UE location request message to the LMF network function, where the deciding UE location request message carries the above-mentioned LPP message.

Step 6. The LMF network function calculates the UE location based on the measurement amount carried in the above-mentioned LPP message.

Step 7. The AMF network function transmits a service acceptance message to the UE. The AMF may also trigger the AN release procedure. There is no order restriction between step 7 and step 6.

Step 8. The AMF transmits a positioning reply message to the GMLC, where the positioning reply message carries the UE location.

Step 9. The GMLC transmits the UE location to the LCS client.

As shown in FIG. 11, an embodiment of the present application further provides a first network function, including a memory 1120, a transceiver 1100 and a processor 1110.

The memory 1120 is used for storing a computer program, the transceiver 1100 is used for transmitting and receiving data under control of the processor 1110, and the processor 1110 is used for reading the computer program in the memory and perform the following operations:
transmitting a first message to a second network function or a third network function, where the first message carries a low power indication and/or area information, the low power indication is used to indicate performing low power location request procedure, and the area information is used to indicate an area inside which a user equipment (UE) is allowed to transmit an event report.

In an embodiment,
the processor 1110 is further used for: determining that first information carries the low power indication, where the first information includes at least one of the following: a UE capability, a client request message, a UE request message, an LCS QoS, UE subscription information, a serving cell of a UE, a network capability, an operator policy, an LCS client type or a service type; or
the processor 1110 is further used for: receiving a positioning request message from a fourth network function, where the positioning request message carries the low power indication.

In an embodiment, the processor 1110 is further used for:
receiving a second message from a UE or the second network function, where the second message carries at least one of the following: first capability information, a low power location request message, or the low power indication,
where the first capability information is used to indicate that the UE supports the low power location request procedure.

In an embodiment, the processor is further used for:
transmitting a second reply message to the UE or the second network function, where the second reply message carries low power positioning configuration information.

In an embodiment, the processor 1110 is further used for:
transmitting a third message to the third network function; and
receiving a third reply message from the third network function, where the third reply message carries the low power positioning configuration information.

The transceiver 1100 is used for transmitting and receiving data under control of the processor 1110.

In FIG. 11, a bus architecture may include any number of interconnected buses and bridges, which are linked together through various circuits of one or more processors represented by the processor 1110 and one or more memories represented by the memory 1120. The bus architecture may also link together various other circuits, such as peripherals, voltage regulators, and power management circuits, etc., which are well known in the art, and therefore are not further described in the present application. The bus interface provides an interface. The transceiver 1100 may include multiple elements, i.e., including a transmitter and a receiver, units for providing communication with various other devices over transmission media including wireless channels, wired channels, fiber optic cables, and the like. The processor 1110 is responsible for managing the bus architecture and general processing, and the memory 1120 may store data used by the processor 1110 when performing operations.

The processor 1110 may be a central processing unit (CPU), an application specific integrated circuit (ASIC), a field programmable gate array (FPGA) or a complex programmable logic device (CPLD), and the processor may also adopt a multi-core architecture.

It should be noted that the first network function provided by the embodiment of the present application can implement all the method steps in the method embodiments performed by the first network function and may achieve the same technical effect. The parts and beneficial effects of this embodiment that are the same as those of the method embodiments are not described in detail.

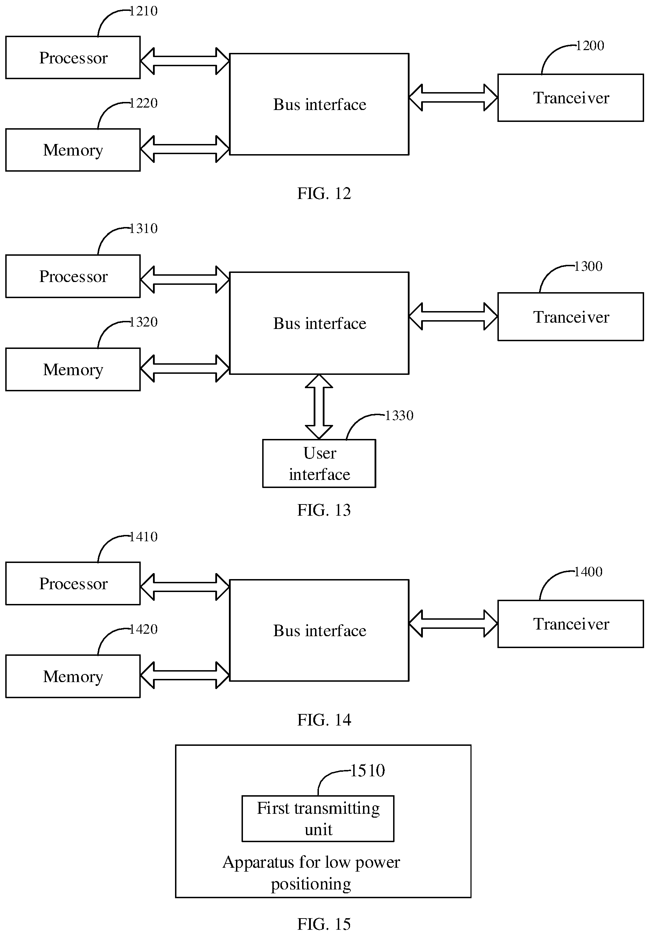

As shown in FIG. 12, an embodiment of the present application further provides a second network function, including a memory 1220, a transceiver 1200 and a processor 1210.

The memory 1220 is used for storing a computer program, the transceiver 1200 is used for transmitting and receiving data under control of the processor 1210, and the processor 1210 is used for reading the computer program in the memory and performing the following operations:
receiving a first message, where the first message carries a low power indication, and the low power indication is used to indicate performing low power location request procedure; and
transmitting a paging message to a user equipment (UE), where the paging message carries the low power indication.

In an embodiment, the processor 1210 is further used for:
transmitting a second message to a first network function, where the second message carries at least one of the following: first capability information, a low power location request message, or the low power indication,
where the first capability information is used to indicate that the UE supports the low power location request procedure.

In an embodiment, the processor 1210 is further used for:
receiving a second reply message from the first network function, where the second reply message carries low power positioning configuration information.

The transceiver 1200 is used for transmitting and receiving data under control of the processor 1210.

In FIG. 12, a bus architecture may include any number of interconnected buses and bridges, which are linked together through various circuits of one or more processors represented by the processor 1210 and one or more memories represented by the memory 1220. The bus architecture may also link together various other circuits, such as peripherals, voltage regulators, and power management circuits, etc., which are well known in the art, and therefore are not further described in the present application. The bus interface provides an interface. The transceiver 1200 may include multiple elements, i.e., including a transmitter and a receiver, units for providing communication with various other devices over transmission media including wireless channels, wired channels, fiber optic cables, and the like. The processor 1210 is responsible for managing the bus architecture and general processing, and the memory 1220 may store data used by the processor 1210 when performing operations.

The processor 1210 may be a central processing unit (CPU), an application specific integrated circuit (ASIC), a field programmable gate array (FPGA) or a complex programmable logic device (CPLD), and the processor may also adopt a multi-core architecture.

It should be noted that the second network function provided by the embodiment of the present application can implement all the method steps in the method embodiments performed by the second network function and may achieve the same technical effect. The parts and beneficial effects of this embodiment that are the same as those of the method embodiments are not described in detail.

As shown in FIG. 13, an embodiment of the present application further provides a UE, including a memory 1320, a transceiver 1300 and a processor 1310.

The memory 1320 memory is used for storing a computer program, the transceiver 1300 is used for transmitting and receiving data under control of the processor 1310, and the processor 1310 is used for reading the computer program in the memory and performing the following operations:
determining a low power indication or low power configuration information; and performing low power location request procedure based on the low power indication or the low power configuration information;
   and/or
determining area information; and transmitting an event report to a first network function in case that the UE is inside an area indicated by the area information.

In an embodiment, performing the low power location request procedure includes:
performing the low power location request procedure in case that a trigger condition is satisfied,
where the trigger condition includes one of the following:
   the UE receives a paging message, where the paging message carries the low power indication; or
   the UE performs mobile originated location request.

In an embodiment, performing the low power location request procedure includes:
performing location measurement in an idle state or in an inactive state.

In an embodiment, the processor 1310 is further used for:
transmitting a second message to the first network function, where the second message carries at least one of the following: first capability information, a low power location request message, or the low power indication,
where the first capability information is used to indicate that the UE supports the low power location request procedure.

In an embodiment, the processor 1310 is further used for:
receiving a second reply message from the first network function, where the second reply message carries low power positioning configuration information.

The transceiver 1300 is used for transmitting and receiving data under control of the processor 1310.

In FIG. 13, a bus architecture may include any number of interconnected buses and bridges, which are linked together through various circuits of one or more processors represented by the processor 1310 and one or more memories represented by the memory 1320. The bus architecture may also link together various other circuits, such as peripherals, voltage regulators, and power management circuits, etc., which are well known in the art, and therefore are not further described in the present application. The bus interface provides an interface. The transceiver 1300 may include multiple elements, i.e., including a transmitter and a receiver, units for providing communication with various other devices over transmission media including wireless channels, wired channels, fiber optic cables, and the like. For different user devices, the user interface 1330 may also be an interface capable of externally or internally connecting required devices, and the connected devices include but are not limited to a small keypad, a display, a speaker, a microphone, a joystick, and the like.

The processor 1310 is responsible for managing the bus architecture and general processing, and the memory 1320 may store data used by the processor 1310 when performing operations.

In an embodiment, the processor 1310 may be a central processing unit (CPU), an application specific integrated circuit (ASIC), a field programmable gate array (FPGA), or a complex programmable logic device (CPLD), and the processor may also adopt a multi-core architecture.

The processor calls a computer program stored in the memory to perform the method for low power positioning on the UE side provided by the embodiment of the present application based on the obtained executable instructions. The processor and the memory can also be arranged physically separately.

It should be noted that the UE provided by the embodiment of the present application can implement all the method steps in the method embodiments performed by the UE and may achieve the same technical effect. The parts and beneficial effects of this embodiment that are the same as those of the method embodiments are not described in detail.

As shown in FIG. 14, the embodiment of the present application further provides a third network function, including a memory 1420, a transceiver 1400 and a processor 1410.

The memory 1420 is used for storing computer programs, the transceiver 1400 is used for transmitting and receiving data under control of the processor 1410, and the processor 1410 is used for reading the computer program in the memory and perform the following operations:
transmitting low power positioning configuration information and/or area information to a user equipment (UE), where the area information is used to indicate an area inside which the UE is allowed to transmit an event report.

In an embodiment, the processor 1410 is further used for:
determining to perform the low power location request procedure; or
receiving a first message from a first network function, where the first message carries a low power indication and/or the area information, the low power indication is used to indicate performing low power location request procedure, and the area information is used to indicate the area inside which the UE is allowed to transmit the event report; or
receiving a third message from the first network function, where the third message is used to request the low power positioning configuration information.

In an embodiment, transmitting the low power positioning configuration information to the UE includes one of the following:
directly transmitting the low power positioning configuration information to the UE;
transmitting a first reply message to a first network function, where the first reply message carries the low power positioning configuration information; or
transmitting a third reply message to a first network function, where the third reply message carries the low power positioning configuration information.

The transceiver 1400 is used for transmitting and receiving data under control of the processor 1410.

In FIG. 14, a bus architecture may include any number of interconnected buses and bridges, which are linked together through various circuits of one or more processors represented by the processor 1410 and one or more memories represented by the memory 1420. The bus architecture may also link together various other circuits, such as peripherals, voltage regulators, and power management circuits, etc., which are well known in the art, and therefore are not further described in the present application. The bus interface provides an interface. The transceiver 1400 may include multiple elements, i.e., including a transmitter and a receiver, units for providing communication with various other devices over transmission media including wireless channels, wired channels, fiber optic cables, and the like. The processor 1410 is responsible for managing the bus architecture and general processing, and the memory 1420 may store data used by the processor 1410 when performing operations.

The processor 1410 may be a central processing unit (CPU), an application specific integrated circuit (ASIC), a field programmable gate array (FPGA) or a complex programmable logic device (CPLD), and the processor may also adopt a multi-core architecture.

It should be noted that the third network function provided by the embodiment of the present application can implement all the method steps in the method embodiments performed by the third network function and may achieve the same technical effect. The parts and beneficial effects of this embodiment that are the same as those of the method embodiments are not described in detail.

FIG. 15 is a first schematic structural diagram of an apparatus for low power positioning according to an embodiment of the present application. As shown in FIG. 15, the embodiment of the present application provides an apparatus for low power positioning, including:
a first transmitting unit 1510, used for transmitting a first message to a second network function or a third network function, where the first message carries a low power indication and/or area information, the low power indication is used to indicate performing low power location request procedure, and the area information is used to indicate an area inside which a user equipment (UE) is allowed to transmit an event report.

In an embodiment, the apparatus further includes:
a first determining unit, used for determining that first information carries the low power indication, where the first information includes at least one of the following: a UE capability, a client request message, a UE request message, an LCS QoS, UE subscription information, a serving cell of a UE, a network capability, an operator policy, an LCS client type or a service type; or
a first receiving unit, used for receiving a positioning request message from a fourth network function, where the positioning request message carries the low power indication.

In an embodiment, the apparatus further includes:
a second receiving unit, used for receiving a second message from a UE or the second network function, where the second message carries at least one of the following: first capability information, a low power location request message, or the low power indication,
where the first capability information is used to indicate that the UE supports the low power location request procedure.

In an embodiment, the apparatus further includes:
a second transmitting unit, used for transmitting a second reply message to the UE or the second network function, where the second reply message carries low power positioning configuration information.

In an embodiment, the apparatus further includes:
a third transmitting unit, used for transmitting a third message to the third network function; and
a third receiving unit, used for receiving a third reply message from the third network function, where the third reply message carries the low power positioning configuration information.

It should be noted that the above-mentioned apparatus provided by the embodiment of the present application can implement all the method steps in the method embodiments performed by the first network function, and achieve the same technical effect. The parts and beneficial effects of this embodiment that are the same as those of the method embodiments are not described in detail.

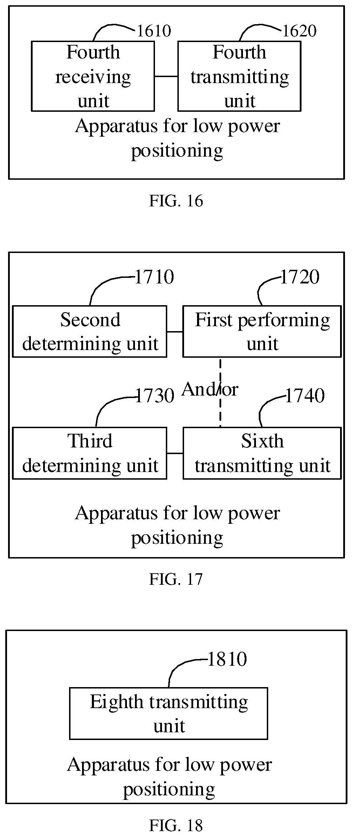

FIG. 16 is a second schematic structural diagram of an apparatus for low power positioning according to an embodiment of the present application. As shown in FIG. 16, an embodiment of the present application provides an apparatus for low power positioning, including:
a fourth receiving unit 1610, used for receiving a first message, where the first message carries a low power indication, and the low power indication is used to indicate performing low power location request procedure; and
a fourth transmitting unit 1620, used for transmitting a paging message to a user equipment (UE), where the paging message carries the low power indication.

In an embodiment, the apparatus further includes:
a fifth transmitting unit, used for transmitting a second message to a first network function, where the second message carries at least one of the following: first capability information, a low power location request message, or the low power indication,
where the first capability information is used to indicate that the UE supports the low power location request procedure.

In an embodiment, the apparatus further includes:
a fifth receiving unit, used for receiving a second reply message from the first network function, where the second reply message carries low power positioning configuration information.

It should be noted that the above-mentioned apparatus provided by the embodiment of the present application can implement all the method steps in the method embodiments performed by the second network function, and achieve the same technical effect. The parts and beneficial effects of this embodiment that are the same as those of the method embodiments are not described in detail.

FIG. 17 is a third schematic structural diagram of an apparatus for low power positioning provided by an embodiment of the present application. As shown in FIG. 17, an embodiment of the present application provides an apparatus for low power positioning, including a second determining unit 1710 and a first performing unit 1720 and/or a third determining unit 1730 and a sixth transmitting unit 1740.

The second determining unit 1710 is used for determining a low power indication or low power configuration information; and the first performing unit 1720 is used for performing low power location request procedure based on the low power indication or the low power configuration information;
and/or
the third determining unit 1730 is used for determining area information; and the sixth transmitting unit 1740 is used for transmitting an event report to a first network function in case that the UE is inside an area indicated by the area information.

In an embodiment, performing the low power location request procedure includes:
performing the low power location request procedure in case that a trigger condition is satisfied,
where the trigger condition includes one of the following:
   a paging message is received, where the paging message carries the low power indication; or
   mobile originated location request is performed.

In an embodiment, performing the low power location request procedure includes:
performing location measurement in an idle state or in an inactive state.

In an embodiment, the apparatus further includes:
a seventh transmitting unit, used for transmitting a second message to the first network function, where the second message carries at least one of the following: first capability information, a low power location request message, or the low power indication,
where the first capability information is used to indicate that the UE supports the low power location request procedure.

In an embodiment, the apparatus further includes:
a sixth receiving unit, used for receiving a second reply message from the first network function, where the second reply message carries low power positioning configuration information.

It should be noted that the above-mentioned apparatus provided by the embodiment of the present application can implement all the method steps in the method embodiments performed by the UE, and achieve the same technical effect. The parts and beneficial effects of this embodiment that are the same as those of the method embodiments are not described in detail.

FIG. 18 is a fourth schematic structural diagram of an apparatus for low power positioning according to an embodiment of the present application. As shown in FIG. 18, an embodiment of the present application provides an apparatus for low power positioning, including:
an eighth transmitting unit 1810, used for transmitting low power positioning configuration information and/or area information to a user equipment (UE), where the area information is used to indicate an area inside which the UE is allowed to transmit an event report.

In an embodiment, the apparatus further includes:
a first determining unit, used for determining to perform the low power location request procedure; or
a seventh receiving unit, used for receiving a first message from a first network function, where the first message carries a low power indication, and the low power indication is used to indicate performing low power location request procedure; or
an eighth receiving unit, used for receiving a first message from a first network function, where the first message carries a low power indication and/or the area information, the low power indication is used to indicate performing low power location request procedure, and the area information is used to indicate the area inside which the UE is allowed to transmit the event report.

In an embodiment, transmitting the low power positioning configuration information to the UE includes one of the following:
directly transmitting the low power positioning configuration information to the UE;
transmitting a first reply message to a first network function, where the first reply message carries the low power positioning configuration information; or
transmitting a third reply message to a first network function, where the third reply message carries the low power positioning configuration information.

It should be noted that the above-mentioned apparatus provided by the embodiment of the present application can implement all the method steps in the method embodiments performed by the third network function, and achieve the same technical effect. The parts and beneficial effects of this embodiment that are the same as those of the method embodiments are not described in detail.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor-readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as a U disk, a mobile hard disk, a read-only memory (ROM), a random access memory (RAM), a magnetic disk, or a compact disk.

An embodiment of the present application further provides a processor-readable storage medium, which stores a computer program, and the computer program is used to cause a processor to perform the method provided by the above-mentioned first network function side method embodiments, or the method provided by the second network function side method embodiments, or the method provided by the embodiments on the UE side, or the method provided by the third network function side method embodiments.

The processor-readable storage medium may be any available medium or data storage device that may be accessed by the processor, including but not limited to, a magnetic storage (e.g., a floppy disk, a hard disk, a magnetic tape, a magneto-optical disk (MO), etc.), an optical memory (such as CD, DVD, BD, HVD, etc.), and a semiconductor memory (such as ROM, EPROM, EEPROM, a non-volatile memory (NAND FLASH), a solid-state drive (SSD)), etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A method for low power positioning, performed by a first network function, comprising:
transmitting a first message to a second network function or a third network function, wherein the first message carries a low power indication and/or area information, the low power indication is used to indicate performing low power location request procedure, and the area information is used to indicate an area inside which a user equipment, UE, is allowed to transmit an event report.

2. The method of claim 1, wherein before transmitting the first message to the second network function or the third network function, the method further comprises:
determining that first information carries the low power indication, wherein the first information comprises at least one of the following: a UE capability, a client request message, a UE request message, a location service, LCS, quality of service, QoS, UE subscription information, a serving cell of a UE, a network capability, an operator policy, an LCS client type or a service type; or
receiving a positioning request message from a fourth network function, wherein the positioning request message carries the low power indication.

3. The method of claim 1, wherein before transmitting the first message to the second network function or the third network function, the method further comprises:
receiving a second message from a UE or the second network function, wherein the second message carries at least one of the following: first capability information, a low power location request message, or the low power indication,
wherein the first capability information is used to indicate that the UE supports the low power location request procedure.

4. The method of claim 3, further comprising:
transmitting a second reply message to the UE or the second network function, wherein the second reply message carries low power positioning configuration information.

5. The method of claim 4, wherein before transmitting the second reply message to the UE or the second network function, the method further comprises:
transmitting a third message to the third network function; and
receiving a third reply message from the third network function, wherein the third reply message carries the low power positioning configuration information.

6. A method for low power positioning, performed by a second network function, comprising:
receiving a first message, wherein the first message carries a low power indication, and the low power indication is used to indicate performing low power location request procedure; and
transmitting a paging message to a user equipment, UE, wherein the paging message carries the low power indication.

7. The method of claim 6, further comprising:
transmitting a second message to a first network function, wherein the second message carries at least one of the following: first capability information, a low power location request message, or the low power indication,
wherein the first capability information is used to indicate that the UE supports the low power location request procedure.

8. The method of claim 7, further comprising:
receiving a second reply message from the first network function, wherein the second reply message carries low power positioning configuration information.

9. A method for low power positioning, performed by a user equipment, UE, comprising:
determining a low power indication or low power configuration information; and performing low power location request procedure based on the low power indication or the low power configuration information;
and/or
determining area information; and transmitting an event report to a first network function in case that the UE is inside an area indicated by the area information.

10. The method of claim 9, wherein performing the low power location request procedure comprises:
performing the low power location request procedure in case that a trigger condition is satisfied,
wherein the trigger condition comprises one of the following:
the UE receives a paging message, wherein the paging message carries the low power indication; or
the UE performs mobile originated location request.

11. The method of claim 9 or 10, wherein performing the low power location request procedure comprises:
performing location measurement in an idle state or in an inactive state.

12. The method of any one of claims 9 to 11, further comprising:
transmitting a second message to the first network function, wherein the second message carries at least one of the following: first capability information, a low power location request message, or the low power indication,
wherein the first capability information is used to indicate that the UE supports the low power location request procedure.

13. The method of claim 12, further comprising:
receiving a second reply message from the first network function, wherein the second reply message carries low power positioning configuration information.

14. A method for low power positioning, performed by a third network function, comprising:
transmitting low power positioning configuration information and/or area information to a user equipment, UE, wherein the area information is used to indicate an area inside which the UE is allowed to transmit an event report.

15. The method of claim 14, wherein before transmitting the low power positioning configuration information and/or the area information to the UE, the method further comprises:
determining to perform the low power location request procedure; or
receiving a first message from a first network function, wherein the first message carries a low power indication and/or the area information, the low power indication is used to indicate performing low power location request procedure, and the area information is used to indicate the area inside which the UE is allowed to transmit the event report; or
receiving a third message from the first network function, wherein the third message is used to request the low power positioning configuration information.

16. The method of claim 15, wherein transmitting the low power positioning configuration information to the UE comprises one of the following:
directly transmitting the low power positioning configuration information to the UE;
transmitting a first reply message to a first network function, wherein the first reply message carries the low power positioning configuration information; or
transmitting a third reply message to a first network function, wherein the third reply message carries the low power positioning configuration information.

17. A first network function, comprising a memory, a transceiver and a processor, wherein the memory is used for storing a computer program, the transceiver is used for transmitting and receiving data under control of the processor, and the processor is used for reading the computer program in the memory and performing the following operations:
transmitting a first message to a second network function or a third network function, wherein the first message carries a low power indication and/or area information, the low power indication is used to indicate performing low power location request procedure, and the area information is used to indicate an area inside which a user equipment, UE, is allowed to transmit an event report.

18. The first network function of claim 17, wherein
the processor is further used for: determining that first information carries the low power indication, wherein the first information comprises at least one of the following: a UE capability, a client request message, a UE request message, a location service, LCS, quality of service, QoS, UE subscription information, a serving cell of a UE, a network capability, an operator policy, an LCS client type or a service type; or
the processor is further used for: receiving a positioning request message from a fourth network function, wherein the positioning request message carries the low power indication.

19. The first network function of claim 17, wherein the processor is further used for:
receiving a second message from a UE or the second network function, wherein the second message carries at least one of the following: first capability information, a low power location request message, or the low power indication,
wherein the first capability information is used to indicate that the UE supports the low power location request procedure.

20. The first network function of claim 19, wherein the processor is further used for:
transmitting a second reply message to the UE or the second network function, wherein the second reply message carries low power positioning configuration information.

21. The first network function of claim 20, wherein the processor is further used for:
transmitting a third message to the third network function; and
receiving a third reply message from the third network function, wherein the third reply message carries the low power positioning configuration information.

22. A second network function, comprising a memory, a transceiver and a processor,
wherein the memory is used for storing a computer program, the transceiver is used for transmitting and receiving data under control of the processor, and the processor is used for reading the computer program in the memory and performing the following operations:
receiving a first message, wherein the first message carries a low power indication, and the low power indication is used to indicate performing low power location request procedure; and
transmitting a paging message to a user equipment, UE, wherein the paging message carries the low power indication.

23. The second network function of claim 22, wherein the processor is further used for:
transmitting a second message to a first network function, wherein the second message carries at least one of the following: first capability information, a low power location request message, or the low power indication,
wherein the first capability information is used to indicate that the UE supports the low power location request procedure.

24. The second network function of claim 23, wherein the processor is further used for:
receiving a second reply message from the first network function, wherein the second reply message carries low power positioning configuration information.

25. A user equipment, UE, comprising a memory, a transceiver and a processor,
wherein the memory is used for storing a computer program, the transceiver is used for transmitting and receiving data under control of the processor, and the processor is used for reading the computer program in the memory and performing the following operations:
determining a low power indication or low power configuration information; and performing low power location request procedure based on the low power indication or the low power configuration information;
and/or
determining area information; and transmitting an event report to a first network function in case that the UE is inside an area indicated by the area information.

26. The UE of claim 25, wherein performing the low power location request procedure comprises:
performing the low power location request procedure in case that a trigger condition is satisfied,
wherein the trigger condition comprises one of the following:
the UE receives a paging message, wherein the paging message carries the low power indication; or
the UE performs mobile originated location request.

27. The UE of claim 25, wherein performing the low power location request procedure comprises:
performing location measurement in an idle state or in an inactive state.

28. The UE of any one of claims 25 to 27, wherein the processor is further used for:
transmitting a second message to the first network function, wherein the second message carries at least one of the following: first capability information, a low power location request message, or the low power indication,
wherein the first capability information is used to indicate that the UE supports the low power location request procedure.

29. The UE of claim 28, wherein the processor is further used for:
receiving a second reply message from the first network function, wherein the second reply message carries low power positioning configuration information.

30. A third network function, comprising a memory, a transceiver and a processor,
wherein the memory is used for storing a computer program, the transceiver is used for transmitting and receiving data under control of the processor, and the processor is used for reading the computer program in the memory and performing the following operations:
transmitting low power positioning configuration information and/or area information to a user equipment, UE, wherein the area information is used to indicate an area inside which the UE is allowed to transmit an event report.

31. The third network function of claim 30, wherein the processor is further used for:
determining to perform the low power location request procedure; or
receiving a first message from a first network function, wherein the first message carries a low power indication and/or the area information, the low power indication is used to indicate performing low power location request procedure, and the area information is used to indicate the area inside which the UE is allowed to transmit the event report; or
receiving a third message from the first network function, wherein the third message is used to request the low power positioning configuration information.

32. The third network function of claim 31, wherein transmitting the low power positioning configuration information to the UE comprises one of the following:
directly transmitting the low power positioning configuration information to the UE;
transmitting a first reply message to a first network function, wherein the first reply message carries the low power positioning configuration information; or
transmitting a third reply message to a first network function, wherein the third reply message carries the low power positioning configuration information.

33. An apparatus for low power positioning, comprising:
a first transmitting unit, used for transmitting a first message to a second network function or a third network function, wherein the first message carries a low power indication and/or area information, the low power indication is used to indicate performing low power location request procedure, and the area information is used to indicate an area inside which a user equipment, UE, is allowed to transmit an event report.

34. The apparatus of claim 33, further comprising:
a first determining unit, used for determining that first information carries the low power indication, wherein the first information comprises at least one of the following: a UE capability, a client request message, a UE request message, a location service, LCS, quality of service, QoS, UE subscription information, a serving cell of a UE, a network capability, an operator policy, an LCS client type or a service type; or
a first receiving unit, used for receiving a positioning request message from a fourth network function, wherein the positioning request message carries the low power indication.

35. The apparatus of claim 33, further comprising:
a second receiving unit, used for receiving a second message from a UE or the second network function, wherein the second message carries at least one of the following: first capability information, a low power location request message, or the low power indication,
wherein the first capability information is used to indicate that the UE supports the low power location request procedure.

36. The apparatus of claim 35, further comprising:
a second transmitting unit, used for transmitting a second reply message to the UE or the second network function, wherein the second reply message carries low power positioning configuration information.

37. The apparatus of claim 36, further comprising:
a third transmitting unit, used for transmitting a third message to the third network function; and
a third receiving unit, used for receiving a third reply message from the third network function, wherein the third reply message carries the low power positioning configuration information.

38. An apparatus for low power positioning, comprising:
a fourth receiving unit, used for receiving a first message, wherein the first message carries a low power indication, and the low power indication is used to indicate performing low power location request procedure; and
a fourth transmitting unit, used for transmitting a paging message to a user equipment, UE, wherein the paging message carries the low power indication.

39. An apparatus for low power positioning, comprising:
a second determining unit, used for determining a low power indication or low power configuration information; and a first performing unit, used for performing low power location request procedure based on the low power indication or the low power configuration information;
and/or
a third determining unit, used for determining area information; and a sixth transmitting unit, used for transmitting an event report to a first network function in case that the UE is inside an area indicated by the area information.

40. The apparatus of claim 39, wherein performing the low power location request procedure comprises:
performing the low power location request procedure in case that a trigger condition is satisfied,
wherein the trigger condition comprises one of the following:
a paging message is received, wherein the paging message carries the low power indication; or
mobile originated location request is performed.

41. The apparatus of claim 39 or 40, wherein performing the low power location request procedure comprises:
performing location measurement in an idle state or in an inactive state.

42. The apparatus of any one of claims 39 to 41, further comprising:
a seventh transmitting unit, used for transmitting a second message to the first network function, wherein the second message carries at least one of the following: first capability information, a low power location request message, or the low power indication,
wherein the first capability information is used to indicate that the UE supports the low power location request procedure.

43. The apparatus of claim 42, further comprising:
a sixth receiving unit, used for receiving a second reply message from the first network function, wherein the second reply message carries low power positioning configuration information.

44. An apparatus for low power positioning, comprising:
an eighth transmitting unit, used for transmitting low power positioning configuration information and/or area information to a user equipment, UE, wherein the area information is used to indicate an area inside which the UE is allowed to transmit an event report.

45. A processor-readable storage medium, wherein the processor-readable storage medium stores a computer program, the computer program is used to cause a processor to perform the method of any one of claims 1 to 5, or the method of any one of claims 6 to 8, or the method of any one of claims 9 to 13, or the method of any one of claims 14 to 16.
